# EUROPEAN PATENT APPLICATION

(11) **EP 2 747 372 A1**
(43) Date of publication of application: **25.06.2014**
(21) Application number: 12831916.7
(22) Date of filing: 17.09.2012
(51) Int. Cl.: H04L 29/06, H04W 72/08, H04W 74/08

(54) **INFORMATION TRANSMISSION METHOD AND DEVICE**

(30) Priority: 15.09.2011 CN 201110273274
(71) Applicant: Huawei Technologies Co., Ltd, Shenzhen, Guangdong 518129 (CN)
(72) Inventor: YANG, Guorui, Guangdong 518129 (CN); WANG, Xuechuan, Guangdong 518129 (CN)
(74) Representative: Lord, Michael
(86) International application number: PCT/CN2012/081498
(87) International publication number: WO 2013/037327

(57) **Abstract**

Embodiments of the present invention provide an information transmission method and apparatus. The method includes: setting, by a first station based on a protocol version supported by at least one station on a network, a transmission unit sent by the first station, where the transmission unit sent by the first station includes information about a network allocation vector used to set a station; and sending, by the first station, the transmission unit to at least one second station. In the embodiments of the present invention, a transmission unit sent by a station that needs to send a transmission unit can be set based on a protocol version supported by a station on a network, so that one or more other stations are capable of successfully acquiring a network allocation vector included in the transmission unit, thereby reducing a collision probability during access to a medium.

## Description

### CROSS-REFERENCE TO RELATED APPLICATION

This application claims priority to Chinese Patent Application No. 201110273274.4, filed with the Chinese Patent Office on September 15, 2011 and entitled "INFORMATION TRANSMISSION METHOD AND APPARATUS", which is incorporated herein by reference in its entirety.

### TECHNICAL FIELD

Embodiments of the present invention relate to the field of communications technologies, and in particular, to an information transmission method and apparatus.

### BACKGROUND

An addressing mechanism and a channel access control mechanism for multiple stations (STA, Station) on a network are established by using Medium Access Control (MAC, Medium access control) of the IEEE 802.11 protocol version, so that communication between the multiple stations become possible.

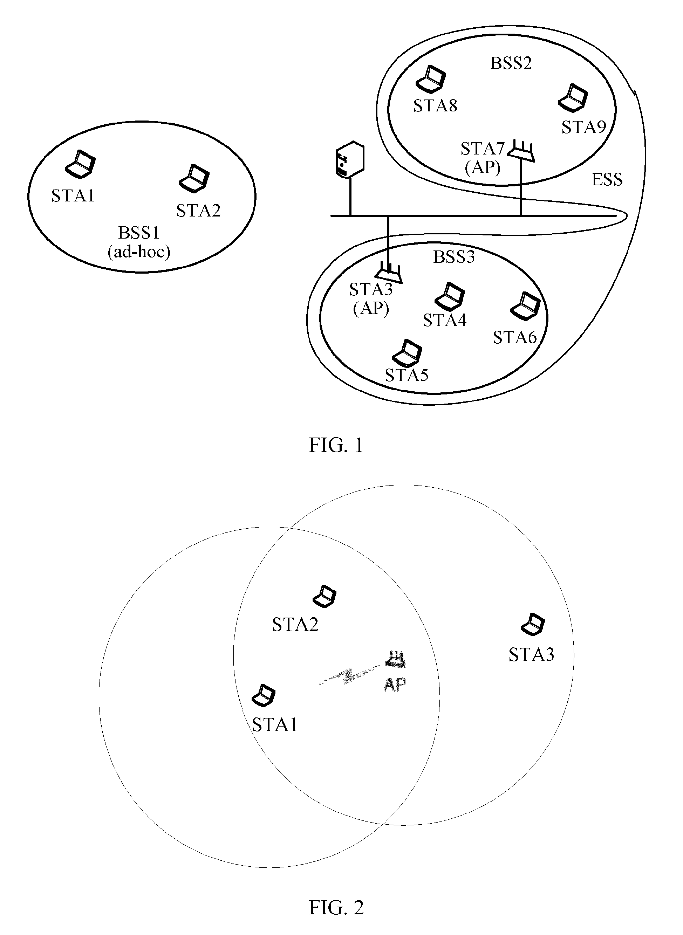

A basic component of a wireless local area network (WLAN, Wireless Local Area Networks) is a basic service set (BSS, Basic Service Set), which is formed of STAs that are in certain particular coverage and have a certain association, such as BSS2 and BSS3 shown in FIG. 1. A central STA that dedicatedly manages BSSs on a BSS network is called an access point (AP, Access Point), and one or more other STAs on the BSS network are associated with the AP. Multiple BSS networks can be connected to each other through a distribution system (DS, Distribution System), that is, an extended service set (ESS, Extended Service Set) is formed. The STAs may also form a network by themselves and directly communicate with each other, that is, an independent basic service set (IBSS, Independent Basic Service Set) is formed, such as BSS1 shown in FIG. 1.

The MAC of the IEEE 802.11 protocol version uses a carrier sense multiple access with collision avoidance (CSMA/CA, Carrier Sense Multiple Access With Collision Avoidance) mechanism to monitor a channel and avoid a collision, so as to reduce a collision probability when each STA accesses the WLAN, where this mechanism is called a distributed coordination function (DCF, Distributed coordinator function). A basic thought of the mechanism is a random rollback, that is, an STA having a medium access requirement first needs to monitor idle time of a channel for up to a DCF interframe space (DIFS, DCF Inter-Frame Space), then randomly selects, in uniform distribution of an interval [0, CW] (Contention Window, contention window), a random rollback count BT that forms, together with a time limit length (aSlotTime), a random rollback time period, and lengthens monitorion time according to the time period. If the channel is still idle in a time period of DIFS+BT*aSlotTime, the STA first obtains a medium access opportunity.

An enhanced distributed channel access (EDCA, Enhanced distributed channel access) mechanism is introduced to the IEEE 802.11e protocol version so as to support quality of service (QoS, Quality of service) with a priority. The EDCA mechanism defines four access categories ACs, and each AC has a different arbitration inter-frame space (AIFS, arbitration inter-frame space) and a different contention window CW[AC] according to a priority difference. Therefore, when having a service requirement, each AC may independently participate in monitorion contention of medium access, and idle duration of a channel that is monitored by the AC is AIFS[AC]+BT[AC]* aSlotTime, where a random rollback count BT[AC] is randomly selected in uniform distribution of an interval [0, CW[AC]]. If the channel is idle in the monitorion duration, the AC can obtain a medium access opportunity.

A virtual carrier sense (Virtual Carrier Sense) mechanism is further introduced in the IEEE 802.11 protocol version, so that a source STA notifies one or more other STAs of channel occupancy time of the source STA (for example, by using a duration field in a MAC frame), so that the one or more other STAs stop sending data in this period of time, so as to reduce a collision probability. The MAC frame is borne by a physical layer convergence procedure (PLCP, Physical Layer Convergence Procedure) protocol data unit (PPDU). When detecting the duration field in the MAC frame that is being transmitted over the channel, an STA (except a target station that successfully demodulates the frame) may set or update its own network allocation vector (NAV, Network Allocation Vector) according to the duration field. The "duration" field includes a time value in the unit of microsecond (us), and this value identifies a time length when the medium is busy, where the time length is predicted by a station sending the frame and is counted starting from the end of the last PPDU that bears the MAC frame.

Currently, there are various protocol versions, such as IEEE 802.11b, IEEE 802.11g, IEEE 802.11n, and IEEE 802.11ac. With an increase in versions, STAs that are in different forms and support various protocols, such as an HT (high throughput, High Throughput) STA, a no-HT (no-high throughput, no-High Throughput) STA, and a VHT (very high throughput, Very High Throughput) STA, may exist on a BSS/IBSS network. If an STA sends a MAC frame of a later version, an STA of an earlier version may fail to demodulate the frame and fail to correctly set a NAV value , which increases a collision probability of STA access.

### SUMMARY

Embodiments of the present invention provide an information transmission method and apparatus, which are capable of reducing a collision probability during access to a medium.

According to one aspect, an information transmission method is provided, including: setting, by a first station based on a protocol version supported by at least one station on a network, a transmission unit sent by the first station, where the transmission unit sent by the first station includes information about a network allocation vector used to set a station; and sending, by the first station, the transmission unit to at least one second station.

According to another aspect, an information transmission apparatus is provided, including: a setting module, configured to set, based on a protocol version supported by at least one station on a network, a transmission unit to be sent, where the transmission unit to be sent includes information about a network allocation vector used to set a station; and a sending module, configured to send the transmission unit to the at least one station.

In embodiments of the present invention, a transmission unit sent by a station that needs to send a transmission unit can be set based on a protocol version supported by a station on a network, so that one or more other stations are capable of successfully acquiring a network allocation vector included in the transmission unit, thereby reducing a collision probability during access to a medium.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic architectural diagram of a wireless local area network;
FIG. 2 is a schematic distribution diagram of a hidden node on a wireless local area network;
FIG. 3 is a schematic flowchart of an information transmission method according to an embodiment of the present invention;
FIG. 4 is a schematic flowchart of an information transmission method according to another embodiment of the present invention;
FIG. 5 is a schematic flowchart of an information transmission method according to another embodiment of the present invention;
FIG. 6 is a schematic flowchart of a process of a first frame exchange performed in a TXOP according to an embodiment of the present invention.
FIG. 7 is a schematic structural diagram of an information transmission apparatus 700 according to an embodiment of the present invention;
FIG. 8 is a schematic structural diagram of an information transmission apparatus 800 according to another embodiment of the present invention; and
FIG. 9 is a schematic structural diagram of an information transmission apparatus 900 according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as a wireless local area network (WLAN, Wireless Local Area Networks), Wireless Fidelity (Wifi, Wireless Fidelity), a GSM, a Code Division Multiple Access (CDMA, Code Division Multiple Access) system, Wideband Code Division Multiple Access (WCDMA, Wideband Code Division Multiple Access Wireless), a general packet radio service (GPRS, General Packet Radio Service), and Long Term Evolution (LTE, Long Term Evolution). The following embodiments use the WLAN as an example for description.

STAs refer to various intelligent terminal devices on a WLAN and may be mobile terminals, such as a mobile phone (or called a "cellular" phone) and a computer on which a wireless adapter card is installed, for example, the computer may be a portable, pocket-sized, handheld, or desktop computer. They exchange voice and/or data with a radio access network, but the embodiments of the present invention are not limited thereto. For example, an STA may also be an AP of a BSS or an STA having an AP function on an IBSS, such as an IBSS owner (IBSS owner).

On the WLAN, the STA may obtain a transmit opportunity (TXOP, Transmit opportunity) by using a contention mechanism. In a TXOP time limit, the STA exclusively occupies medium resources and may send one or more data frames, management frames, and control frames. Each AC on EDCA may also independently obtain a TXOP and exclusively occupy the medium resources. An STA obtaining a transmit opportunity is called a transmit opportunity holder (TXOP holder), and an STA that establishes a transmission link with the STA obtaining the transmit opportunity is called a transmit opportunity responder (TXOP responder).

In addition, on the WLAN, a physical carrier sense mechanism is responsible for detecting transmission of one or more other STAs, so as to avoid a collision. However, because of an unknown reason, such as a geographical reason, it is possible that the physical carrier sense cannot detect transmission of all STAs. Referring to FIG. 2, STA 1 establishes a data transmission path with an AP, and signals sent from STA 1 can be detected by the AP and STA 2. However, for remote station STA 3, it can only detect signals sent from the AP and cannot detect the signals of STA 1. When STA 1 sends signals to the AP, STA 3 may still consider that a channel is in idle state and may send signals to the AP, thereby causing interference in receiving, by the AP, the signals of STA 1. STA 3 is generally called a hidden node of STA 1.

On the WLAN, a NAV function may be used to overcome a problem of a hidden node. For example, in the TXOP, first, an STA covered by the TXOP holder and an STA covered by an initial TXOP responder set their NAV values through a short frame exchange, and they are forbidden to access a medium in a time period in which the NAV values are not zero, unless the STA is required by the TXOP holder to feed back a response frame. The short frame exchange may be a request-to-send frame/clear-to-send frame (RTS/CTS, Request To Send/Clear To Send) exchange or a short data frame/ACK frame exchange. In a subsequent TXOP time period, a non-sleeping STA that sets a NAV continues to monitor a MAC frame received by the STA. If a destination of the MAC frame is not the STA, the STA extracts a "duration" field, compares the field with a NAV value stored on the STA itself, and finally selects a larger value of the two as the NAV; and if the destination is the STA, the NAV value keeps unchanged. The NAV value continues to decrease as time goes by, and the STA does not enter into a channel contention state until the NAV value is 0. A hidden node of the TXOP holder may obtain, from the TXOP responder, a duration field that is used to set or update a NAV value, and stops accessing the medium in this period of time. This avoids causing interference in communication between the TXOP holder and the TXOP responder.

However, in the IEEE 802.11 protocol, no strict rule was made for a MAC frame type used for a TXOP first frame exchange. In addition to an RTS/CTS exchange and a short data frame/ACK frame exchange, the first frame exchange may also be a frame exchange in one or more other manners. With an increase in versions, if an STA sends a MAC frame of a later version as a first frame, an STA of an earlier version (such as a hidden node) may fail to demodulate the frame. Therefore a NAV value cannot be correctly set, and a problem of a hidden node cannot be avoided.

According to this embodiment of the present invention, a MAC frame type in a TXOP first frame is set, thereby avoiding a problem that interference of a hidden node exists because an STA supporting only an earlier version cannot set a NAV.

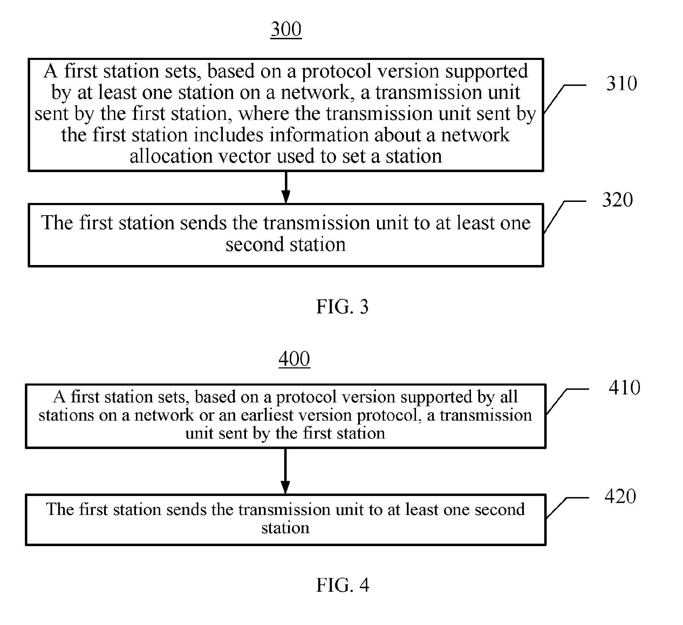

FIG. 3 is a schematic flowchart of an information transmission method 300 according to an embodiment of the present invention. A first STA in the method 300 shown in FIG. 3 may be an AP or a common STA on a WLAN.

310. The first STA sets, based on a protocol version supported by at least one STA on a network, a transmission unit sent by the first STA, where the transmission unit sent by the first STA includes information about a network allocation vector used to set an STA.

For example, the transmission unit may be a PLCP protocol data unit used to bear a MAC frame, and the information about the network allocation vector used to set an STA may be a duration field or another parameter used to indicate duration information.

For example, a transmission unit set based on a certain protocol version can be demodulated by only an STA that supports the protocol version or supports a later protocol version. Therefore, the transmission unit can be set based on an earliest protocol version or a protocol version supported by all STAs, and in this case, all STAs are capable of demodulating the transmission unit.

For example, the first STA may be a TXOP holder or a TXOP responder. The first STA may be an AP or a common STA. The first STA may acquire protocol version information of an STA associated with the first STA, and set the transmission unit according to the acquired protocol version information, but this embodiment of the present invention is not limited thereto. For example, the protocol version of the first STA may be manually set and prestored on the first STA, so that the first STA can use the protocol version when setting the transmission unit.

For example, the network may refer to a single BSS network, a single IBSS network, or a network formed of multiple BSS networks. Alternatively, the network may also refer to a combination of a BSS network and a neighboring BSS network of the BSS network.

320. The first STA sends the transmission unit to at least one second STA.

For example, when the first STA is the TXOP holder, the transmission unit may be a TXOP first frame; and when the first STA is the TXOP responder, the transmission unit may be a response frame fed back to the first frame.

For example, the at least one second STA is an STA covered by the first STA.

In this embodiment of the present invention, a transmission unit sent by a certain STA can be set based on a protocol version supported by an STA on a network, so that one or more other STAs are capable of successfully acquiring a network allocation vector included in the transmission unit, thereby reducing a collision probability during access to a medium.

FIG. 4 is a schematic flowchart of an information transmission method 400 according to another embodiment of the present invention. 410 and 420 in FIG. 4 are similar to 310 and 320 in FIG. 3, and therefore no further details are provided herein. In the method 400 in FIG. 4, a first STA may be an AP or a common STA on a WLAN.

410. The first STA sets, based on a protocol version supported by all STAs on a network or an earliest protocol version, a transmission unit sent by the first STA, where the transmission unit sent by the first STA includes information about a network allocation vector used to set an STA.

For example, the protocol version may be manually set on the first STA and prestored on the first STA, so that the first STA can use the protocol version when setting the transmission unit.

420. The first STA sends the transmission unit to at least one second STA.

According to another embodiment of the present invention, the transmission unit includes an RTS frame or a short data frame, and the method further includes: receiving, by the first STA, a responded transmission unit from an STA responding to the first STA, where the responded transmission unit includes a clear-to-send frame responding to the RTS frame or an acknowledgment frame responding to the short data frame. For example, this embodiment of the present invention is not limited thereto, and the transmission unit may also include a MAC frame of another type according to a difference of a protocol version.

According to an embodiment of the present invention, the first STA is a TXOP holder, the STA responding to the first STA is a TXOP responder, and the transmission unit is a first frame sent in a TXOP; in 420, the TXOP holder sends the transmission unit to the TXOP responder, so that the TXOP responder sends the responded transmission unit to an STA covered by the TXOP responder; and the TXOP holder sends the transmission unit to an STA covered by the TXOP holder except the TXOP responder, so that the STA except the TXOP responder sets a local network allocation vector according to the information about the network allocation vector used to set an STA.

According to another embodiment of the present invention, the method further includes: forbidding, by the TXOP holder, a null data packet announcement frame to serve as a first frame sent in a TXOP.

For example, in the IEEE 802.11ac protocol version, a new frame, that is, a null data packet announcement (NDPA, Null Data Packet Announcement), is introduced to centrally perform channel detection for multiple STAs, where the NDPA frame is a frame requiring no feedback. If the NDPA frame serves as the TXOP first frame, a problem that collision detection cannot be timely performed occurs. Therefore, according to the another embodiment of the present invention, the NDPA frame is forbidden to serve as the first frame sent in the TXOP, so as to further reduce a collision probability during access to a medium.

According to an embodiment of the present invention, the transmission unit and the responded transmission unit are PLCP protocol data units, and the information about the network allocation vector used to set an STA includes a duration field.

In this embodiment of the present invention, a transmission unit sent by a certain STA can be set based on a protocol version supported by an STA on a network, so that one or more other STAs are capable of successfully acquiring a network allocation vector included in the transmission unit, thereby reducing a collision probability during access to a medium. In addition, in this embodiment of the present invention, a problem that collision detection cannot be performed and interference of a hidden node exists because an STA of an earlier version cannot set a NAV can be effectively avoided by selecting a proper protocol version to set the transmission unit.

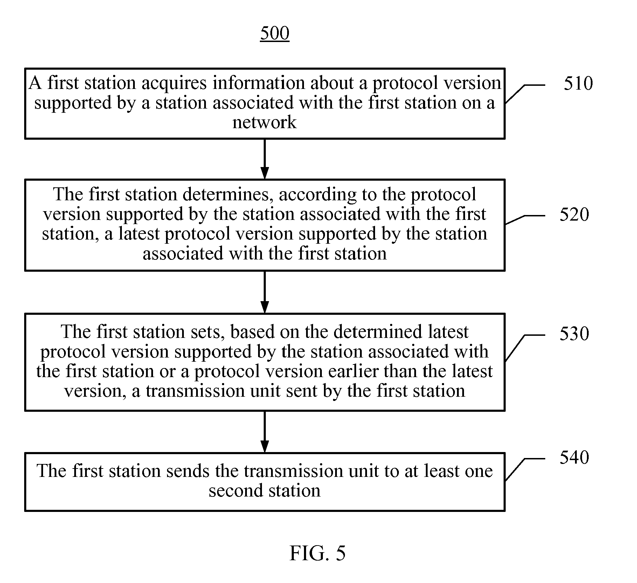

FIG. 5 is a schematic flowchart of an information transmission method 500 according to another embodiment of the present invention. In the method in FIG. 5, a first STA may be an AP on a WLAN.

510. The first STA acquires information about a protocol version supported by an STA associated with the first STA on a network.

For example, serving as an AP, the first STA may establish an association with each STA on a BSS network on which the first STA is located, so that the first STA is capable of acquiring information about a protocol version supported by each STA on the BSS network.

520. The first STA determines, according to the protocol version supported by the STA associated with the first STA, a latest protocol version supported by the STA associated with the first STA.

For example, an STA supporting a later protocol version generally is backward compatible with or supports a relatively earlier protocol version. Therefore, only if the latest protocol version supported by the STA associated with the first STA is determined, all protocols supported by the STA can be determined.

530. The first STA sets the transmission unit based on the determined latest protocol version supported by the STA associated with the first STA or a protocol version earlier than the latest version.

For example, if it is determined that the latest protocol version supported by the STA associated with the first STA is the IEEE 802.11n protocol, the transmission unit can be set based on the IEEE 802.11n protocol or a protocol whose version is earlier than the IEEE 802.11n protocol..

540. The first STA sends the transmission unit to at least one second STA.

According to another embodiment of the present invention, the transmission unit includes an RTS frame or a short data frame, and the method further includes: receiving, by the first STA, a responded transmission unit from an STA responding to the first STA, where the responded transmission unit includes a CTS frame responding to the RTS frame or an acknowledgment frame responding to the short data frame.

According to another embodiment of the present invention, the first STA is a TXOP holder, the STA responding to the first STA is a TXOP responder, and the transmission unit is a first frame sent in a TXOP; in 540, the TXOP holder sends the transmission unit to the TXOP responder, so that the TXOP responder sends the responded transmission unit to an STA covered by the TXOP responder; and the TXOP holder sends the transmission unit to an STA covered by the TXOP holder except the TXOP responder, so that the STA except the TXOP responder sets a local network allocation vector according to the information about the network allocation vector used to set an STA.

According to another embodiment of the present invention, the method further includes: forbidding, by the TXOP holder, a null data packet announcement frame to serve as a first frame sent in a TXOP.

According to an embodiment of the present invention, the transmission unit and the responded transmission unit are PLCP protocol data units, and the information about the network allocation vector used to set an STA includes a duration field.

In this embodiment of the present invention, a transmission unit sent by a certain STA can be set based on a version of protocol supported by an STA on a network, so that one or more other STAs are capable of successfully acquiring a network allocation vector included in the transmission unit, thereby reducing a collision probability during access to a medium. In addition, in this embodiment of the present invention, a problem that collision detection cannot be performed and interference of a hidden node exists because an STA of an earlier version cannot set a NAV can be effectively avoided by selecting a proper protocol version to set the transmission unit.

It should be noted that according to another embodiment of the present invention, the first STA may also be a TXOP responder responding to another STA, and in this situation, the transmission unit may be a response frame responding to a first frame sent by the another STA in the TXOP. Regardless of a protocol version supported by an STA sending a first frame to the first STA, the first STA is capable of determining, according to the acquired information about the protocol version supported by the STA associated with the first STA on the network, a latest protocol version supported by the STA associated with the first STA or a protocol version earlier than a latest version, and setting the response frame based on the determined protocol version, so that a hidden node covered by the first STA is capable of receiving the response frame and correctly setting a NAV, thereby avoiding a problem of the hidden node and reducing a collision probability.

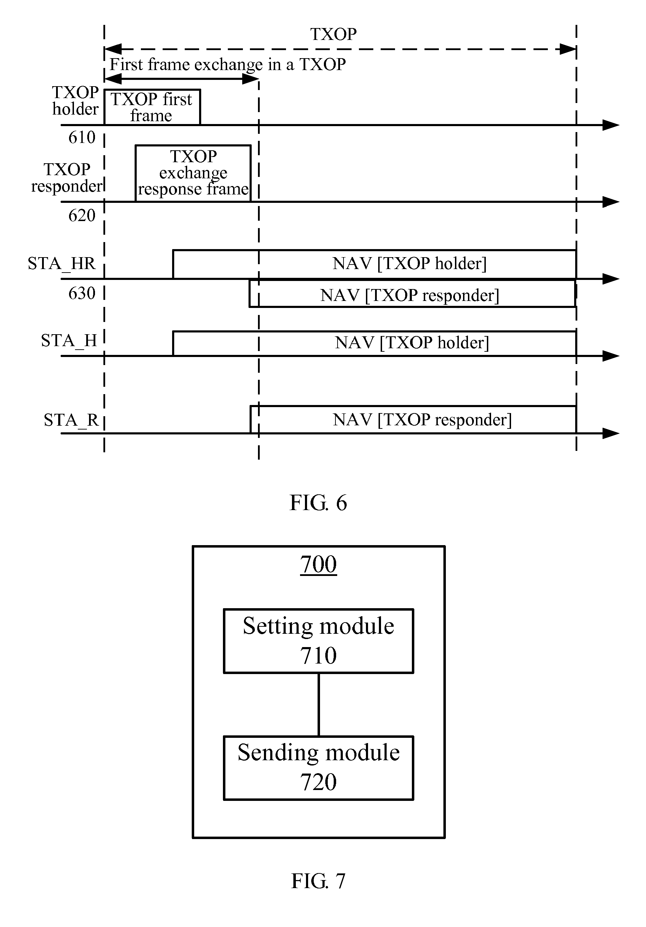

The following describes an embodiment of the present invention with more details by combining specific examples. FIG. 6 is a schematic flowchart of a process of a first frame exchange performed in a TXOP according to an embodiment of the present invention. In FIG. 6, an example in which a first frame exchange in a TXOP period is used to describe the present invention. This embodiment describes a design method for performing a first frame exchange at the beginning of a TXOP on a BSS/IBSS network when an STA has properties of various versions.

On a BSS network on a WLAN, an AP or an IBSS owner (IBSS owner) on an IBSS network is associated with at least one STA. The at least one STA may be a no-HT STA supporting the IEEE 802.11 protocol, an HT STA supporting IEEE 802.11n, or a VHT STA supporting IEEE 802.11ac.

610. After obtaining a TXOP by using a contention mechanism, a TXOP holder must perform a first frame exchange (involving a TXOP first frame and a TXOP exchange response frame), so as to perform anti-collision detection and set a NAV of a neighboring STA. For example, the TXOP holder sends a first frame to all STAs covered by the TXOP holder. The TXOP first frame may be set as a MAC frame, such as a no-HT PPDU, that requires immediate feedback from a TXOP responder. A first frame sent by the TXOP responder is a no-HT PPDU set based on a currently earliest protocol version, and therefore an STA of any type is capable of demodulating the no-HT PPDU. The TXOP holder may be an AP/an IBSS owner or a common STA.

620. After receiving the no-HT PPDU from the TXOP holder, the TXOP responder returns the TXOP exchange response frame to the TXOP holder, where the TXOP exchange response frame may be a no-HT PPDU used to feed back the TXOP first frame, and the TXOP exchange response frame further includes a duration field used for setting a NAV of an STA.

630. One or more other STAs receive the TXOP first frame that is sent by the TXOP holder, receive the TXOP exchange response frame that is sent by the TXOP responder, and acquire the duration field. As shown in FIG. 6, STA_HR receives both the TXOP first frame that is sent by the TXOP holder and the TXOP exchange response frame that is sent by the TXOP responder. STA_H receives only the TXOP first frame that is sent by the TXOP holder, and STA_R cannot receive the first frame sent by the TXOP holder but can receive the TXOP exchange response frame that is sent by the TXOP responder. Therefore, all these STAs can receive and demodulate the no-HT PPDU including the duration field, so as to correctly set local NAVs, thereby reducing a collision probability during access to a medium.

If the first frame is successfully exchanged, for example, the TXOP holder receives the TXOP exchange response frame, a TXOP of the TXOP holder is reserved; and otherwise, the TXOP of the TXOP holder is terminated in advance.

In the embodiment in FIG. 6, a fixed protocol version supported by all STAs is selected according to conditions of protocol versions supported by STAs on a current network, to set a transmission unit (for example, the transmission unit may be a no-HT PPDU set based on an earliest version on the current network). The protocol version supported by all STAs may be manually set, but this embodiment of the present invention is not limited thereto. For example, if the STA is an AP/an IBSS owner, a protocol version supported by all STAs can be determined according to information about a version supported by an STA associated with the STA; and if the STA is not an AP, an AP/an IBSS owner on a network on which the STA is located may determine a version supported by all STAs, and the STA is informed, by broadcast, of the protocol version supported by all STAs or the STA requests, from the AP/the IBSS owner when required, the protocol version supported by all STAs.

According to another embodiment of the present invention, a design method for performing a TXOP first frame exchange in which an AP obtaining a TXOP on a BSS/IBSS network counts the number of STAs that have various properties and are associated with the AP is further provided.

When the TXOP holder itself is an AP/an IBSS owner, the AP/the IBSS owner is capable of determining, according to a protocol version supported by an STA associated with the AP/the IBSS owner, a latest protocol version supported by the STA associated with the AP/the IBSS owner. Then, the AP/the IBSS owner is capable of setting the transmission unit based on the determined latest protocol version supported by the STA associated with the AP/the IBSS owner or a protocol version earlier than the latest version. Specifically, the AP/the IBSS owner may perform the following operations to determine a protocol version used to set the transmission unit:

The AP/the IBSS owner may acquire information about a protocol version supported by the STA associated with the AP/the IBSS owner. The AP/the IBSS owner may count the number of no-HT STAs (for example, a supported latest protocol is IEEE 802.11), HT STAs (for example, a supported latest protocol is IEEE 802.11n), and VHT STAs (for example, a supported latest protocol is IEEE 802.11ac) that are associated with the AP/the IBSS owner.

If the STA associated with the AP/the IBSS owner is a VHT STA, it means that a latest protocol version supported by these STAs is the IEEE 802.11ac protocol, and the TXOP first frame can be set based on the IEEE 802.11ac protocol or a protocol earlier than the IEEE 802.11ac, that is, the TXOP first frame may be any one of PPDUs that include a MAC frame requiring immediate feedback, and the TXOP exchange response frame may include any one of PPDUs used to feed back the TXOP first frame.

If STAs associated with the AP/the IBSS owner include at least one HT STA in addition to a VHT STA, it means that a latest protocol version supported by these STAs is the IEEE 802.11n protocol, and the TXOP first frame can be set based on the IEEE 802.11n protocol or a protocol earlier than the IEEE 802.11n, that is, the TXOP first frame may be a no-HT PPDU or HT PPDUs that include a MAC frame requiring immediate feedback, and the XOP exchange response frame may include no-HT PPDUs or HT PPDUs that are used to feed back the TXOP first frame.

If the STAs associated with the AP/the IBSS owner includes at least one no-HT STA, it means that a latest protocol version supported by these STAs is the IEEE 802.11 protocol, and the TXOP first frame can be set based on the IEEE 802.11 protocol, that is, the TXOP first frame may be no-HT PPDUs that include a MAC frame requiring immediate feedback, and the XOP exchange response frame may include no-HT PPDUs used to feed back the TXOP first frame.

According to an embodiment of the present invention, the TXOP first frame is no-HT PPDUs that include an RTS frame or include a short data frame. The TXOP exchange response frame may include a CTS frame or an ACK frame that is used to feed back the TXOP first frame.

It should be noted that the protocols mentioned during description of this embodiment are only used for the purpose of illustration, this embodiment of the present invention is not limited thereto, and this embodiment of the present invention is applicable to a scenario in which any protocol version is involved.

In the present invention, a first frame exchange of a TXOP holder on a BSS/IBSS network is designed. This can effectively solve the problem of interference of a hidden node caused by the fact that collision detection cannot be performed and an STA of an earlier version cannot set a NAV.

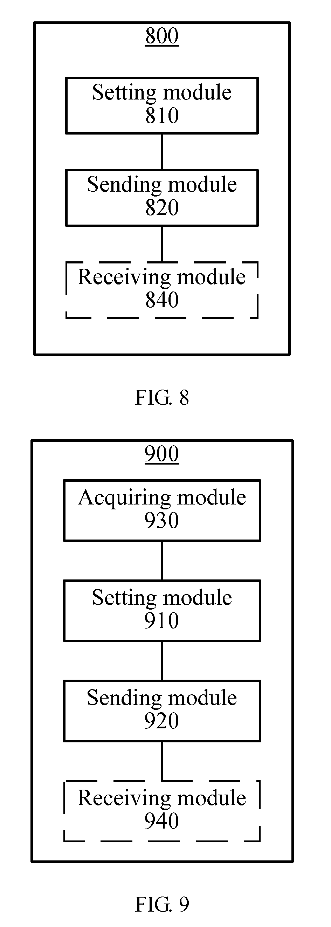

The foregoing describes the information transmission methods according to the embodiments of the present invention, and the following describes information transmission apparatuses according to embodiments of the present invention with reference to FIG. 7 and FIG. 8.

FIG. 7 is a schematic structural diagram of an information transmission apparatus 700 according to an embodiment of the present invention. The apparatus 700 includes: a setting module 710 and a sending module 720.

The setting module 710 sets, based on a protocol version supported by at least one STA on a network, a transmission unit to be sent, where the transmission unit to be sent includes information about a network allocation vector used to set an STA; and the sending module 720 sends the transmission unit to the at least one STA.

In this embodiment of the present invention, a transmission unit sent by a certain STA can be set based on a protocol version supported by an STA on a network, so that one or more other STAs are capable of successfully acquiring a network allocation vector included in the transmission unit, thereby reducing a collision probability during access to a medium.

For operations and functions of the setting module 710 and the sending module 720 of the apparatus 700, reference may be made to 310 and 320 of the method in FIG. 3; and no further details are provided herein to avoid repetition.

FIG. 8 is a schematic structural diagram of an information transmission apparatus 800 according to another embodiment of the present invention. The apparatus 800 includes: a setting module 810 and a sending module 820. The apparatus 800 in FIG. 8 is an STA or an AP.

The setting module 810 sets the transmission unit based on a protocol version supported by all STAs on the network or an earliest protocol version, where the transmission unit to be sent includes information about a network allocation vector used to set an STA; and the sending module 820 sends the transmission unit to at least one STA.

According to an embodiment of the present invention, the transmission unit includes an RTS frame or a short data frame, and the apparatus 800 further includes: a receiving module 840, configured to receive a responded transmission unit from a station responding to the apparatus 800, where the responded transmission unit includes a CTS frame responding to the RTS frame or an acknowledgment frame responding to the short data frame.

According to an embodiment of the present invention, the apparatus 800 is a TXOP holder, the station responding to the apparatus 800 is a TXOP responder, the transmission unit is a first frame sent in a TXOP, and the sending module 820 sends the transmission unit to the TXOP responder, so that the TXOP responder sends the responded transmission unit to a station covered by the TXOP responder. The TXOP holder sends the transmission unit to a station covered by the TXOP holder except the TXOP responder, so that the station except the TXOP responder sets a local network allocation vector according to the information about the network allocation vector used to set a station.

According to another embodiment of the present invention, the setting module 810 further forbids a null data packet announcement frame to serve as a first frame sent in a TXOP.

According to an embodiment of the present invention, the transmission unit and the responded transmission unit are PLCP protocol data units, and the information about the network allocation vector used to set a station includes a duration field.

In this embodiment of the present invention, a transmission unit sent by a certain STA can be set based on a protocol version supported by an STA on a network, so that one or more other STAs are capable of successfully acquiring a network allocation vector included in the transmission unit, thereby reducing a collision probability during access to a medium. In addition, in this embodiment of the present invention, a problem that collision detection cannot be performed and interference of a hidden node exists because an STA of an earlier version cannot set a NAV can be effectively solved by selecting a proper protocol version to set the transmission unit.

For operations and functions of the setting module 810 and the sending module 820 of the apparatus 800, reference may be made to 410 and 420 of the method in FIG. 4; and no further details are provided herein to avoid repetition.

FIG. 9 is a schematic structural diagram of an information transmission apparatus 900 according to another embodiment of the present invention. The apparatus 900 includes: an acquiring apparatus 930, a setting module 910, and a sending module 920. The apparatus 900 in FIG. 9 is an example of an AP.

The acquiring apparatus 930 acquires information about a protocol version supported by an STA associated with the AP on a network. The setting module 910 determines, according to the protocol version supported by the STA associated with the AP, a latest protocol version supported by the STA associated with the AP, and sets the transmission unit based on the determined latest protocol version supported by the STA associated with the AP or a protocol version earlier than the latest version; and the sending module 920 sends the transmission unit to at least one STA.

According to another embodiment of the present invention, the transmission unit includes an RTS frame or a short data frame, and the apparatus further includes: a receiving module 940. The receiving module 940 receives a responded transmission unit from an STA responding to the apparatus 900, where the responded transmission unit includes a CTS frame responding to the RTS frame or an acknowledgment frame responding to the short data frame.

According to an embodiment of the present invention, the apparatus 900 is a TXOP holder, the STA responding to the apparatus 900 is a TXOP responder, the transmission unit is a first frame sent in a TXOP, and the sending module 920 sends the transmission unit to the TXOP responder, so that the TXOP responder sends the responded transmission unit to an STA covered by the TXOP responder. The TXOP holder sends the transmission unit to an STA covered by the TXOP holder except the TXOP responder, so that the STA except the TXOP responder sets a local network allocation vector according to the information about the network allocation vector used to set an STA.

According to an embodiment of the present invention, the setting module 910 is further configured to forbid a null data packet announcement frame to serve as a first frame sent in a TXOP.

According to an embodiment of the present invention, the transmission unit and the responded transmission unit are PLCP protocol data units, and the information about the network allocation vector used to set an STA includes a duration field.

For operations and functions of the setting module 910, the sending module 920, the acquiring apparatus 930, and the receiving module 940 of the apparatus 900, reference may be made to the method in FIG. 5; and no further details are provided herein to avoid repetition.

In this embodiment of the present invention, a transmission unit sent by a certain STA can be set based on a protocol version supported by an STA on a network, so that one or more other STAs are capable of successfully acquiring a network allocation vector included in the transmission unit, thereby reducing a collision probability during access to a medium. In addition, in this embodiment of the present invention, a problem that collision detection cannot be performed and interference of a hidden node exists because an STA of an earlier version cannot set a NAV can be effectively solved by selecting a proper protocol version to set the transmission unit.

An embodiment of the present invention further provides a communications system, which may include the STA and the AP described in the foregoing embodiments.

A person of ordinary skill in the art may be aware that, in combination with the examples described in the embodiments disclosed in this specification, units and algorithm steps may be implemented by electronic hardware, or a combination of computer software and electronic hardware. Whether the functions are performed by hardware or software depends on the particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiments are merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. Apart of or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit.

When the functions are implemented in a form of a software functional module and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the appended claims.

The sequence numbers of the foregoing embodiments of the present invention are merely for the convenience of description, and do not imply the preference among the embodiments.

The foregoing descriptions are merely several specific embodiments of the present invention, but are not intended to limit the present invention. Any variation readily figured out by a person skilled in the art shall fall within the protection scope of the present invention.

## Claims

1. An information transmission method, comprising:
setting, by a first station based on a protocol version supported by at least one station on a network, a transmission unit sent by the first station, wherein the transmission unit sent by the first station comprises information about a network allocation vector used to set a station; and
sending, by the first station, the transmission unit to at least one second station.

2. The method according to claim 1, wherein the setting, by a first station based on a protocol version supported by at least one station on a network, a transmission unit sent by the first station comprises:
setting, by the first station, the transmission unit based on a protocol version supported by all stations on the network or an earliest protocol version.

3. The method according to claim 1, wherein the first station is an access point, the method further comprising:
acquiring, by the first station, information about a protocol version supported by a station associated with the first station on the network, wherein the setting, by a first station based on a protocol version supported by at least one station on a network, a transmission unit sent by the first station comprises:
determining, by the first station according to the protocol version supported by the station associated with the first station, a latest protocol version supported by the station associated with the first station; and
setting, by the first station, the transmission unit based on the determined latest protocol version supported by the station associated with the first station or a protocol version earlier than the latest version.

4. The method according to claim 1, wherein the transmission unit comprises a request-to-send frame or a short data frame, the method further comprising:
receiving, by the first station, a responded transmission unit from a station responding to the first station, wherein the responded transmission unit comprises a clear-to-send frame responding to the request-to-send frame or an acknowledgment frame responding to the short data frame.

5. The method according to claim 4, wherein the first station is a transmit opportunity holder, the station responding to the first station is a transmit opportunity responder, and the transmission unit is a first frame sent in a transmit opportunity, wherein the sending, by the first station, the transmission unit to the at least one second station comprises:
sending, by the transmit opportunity holder, the transmission unit to the transmit opportunity responder, so that the transmit opportunity responder sends the responded transmission unit to a station covered by the transmit opportunity responder; and
sending, by the transmit opportunity holder, the transmission unit to a station covered by the transmit opportunity holder except the transmit opportunity responder, so that the station except the transmit opportunity responder sets a local network allocation vector according to the information about the network allocation vector used to set a station.

6. The method according to claim 5, further comprising:
forbidding, by the transmit opportunity holder, a null data packet announcement frame to serve as the first frame sent in the transmit opportunity.

7. The method according to any one of claims 4 to 6, wherein the transmission unit and the responded transmission unit are PLCP protocol data units, and the information about the network allocation vector used to set a station comprises a duration field.

8. An information transmission apparatus, comprising:
a setting module, configured to set, based on a protocol version supported by at least one station on a network, a transmission unit to be sent, wherein the transmission unit to be sent comprises information about a network allocation vector used to set a station; and
a sending module, configured to send the transmission unit to the at least one station.

9. The apparatus according to claim 8, wherein the setting module sets the transmission unit based on a protocol version supported by all stations on the network or an earliest protocol version.

10. The apparatus according to claim 8, wherein the apparatus is an access point, the apparatus further comprising:
an acquiring apparatus, configured to acquire information about a protocol version supported by a station associated with the access point on the network, wherein the the setting module determines, according to the protocol version supported by the station associated with the access point, a latest protocol version supported by the station associated with the access point, and sets the transmission unit based on the determined latest protocol version supported by the station associated with the access point or a protocol version earlier than the latest version.

11. The apparatus according to claim 8, wherein the transmission unit comprises a request-to-send frame or a short data frame, the apparatus further comprising:
a receiving module, configured to receive a responded transmission unit from a station responding to the apparatus, wherein the responded transmission unit comprises a clear-to-send frame responding to the request-to-send frame or an acknowledgment frame responding to the short data frame.

12. The apparatus according to claim 11, wherein the apparatus is a transmit opportunity holder, the station responding to the apparatus is a transmit opportunity responder, and the transmission unit is a first frame sent in a transmit opportunity, wherein the sending module sends the transmission unit to the transmit opportunity responder, so that the transmit opportunity responder sends the responded transmission unit to a station covered by the transmit opportunity responder; and the transmit opportunity holder sends the transmission unit to a station covered by the transmit opportunity holder except the transmit opportunity responder, so that the station except the transmit opportunity responder sets a local network allocation vector according to the information about the network allocation vector used to set a station.

13. The apparatus according to claim 12, wherein the setting module is further configured to forbid a null data packet announcement frame to serve as the first frame sent in the transmit opportunity.

14. The apparatus according to any one of claims 11 to 13, wherein the transmission unit and the responded transmission unit are PLCP protocol data units, and the information about the network allocation vector used to set a station comprises a duration field.
